# EUROPEAN PATENT APPLICATION

(11) **EP 4 545 787 A1**
(43) Date of publication of application: **30.04.2025**
(21) Application number: 23206340.4
(22) Date of filing: 27.10.2023
(51) Int. Cl.: F03D 80/00, F03D 13/10

(54) **COUPLING SYSTEM FOR COUPLING A SUPPORT PLATFORM TO A WIND TURBINE PLATFORM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

It is described a coupling system for coupling a functional unit (8), in particular hydrogen producing unit, to a wind turbine (1), the coupling system comprising:
a wind turbine platform (6) arrangeable to a wind turbine tower (2); and
a support platform (10) for supporting the functional unit (8);

wherein the wind turbine platform (6) comprises first fixing means (20) and the support platform (10) comprises second fixing means (25); and
wherein the second fixing (25) means are detachably coupled to the first fixing means (20), so that the support platform (10) is detachably arranged at the wind turbine platform (6).

## Description

### Field of invention

The present invention relates in general to wind turbines having a wind turbine platform and a support platform for supporting structure for supporting a functional unit. In particular, the present invention is directed towards a coupling system for coupling such functional unit to the wind turbine, more in particular to a coupling system for coupling a hydrogen producing unit to a decentralized offshore wind turbine for hydrogen production. Furthermore, the present invention is directed towards a method for coupling such functional unit to a wind turbine.

### Art Background

Wind turbines may comprise functional unit for carrying out particular functionalities provided by the wind turbine.

In particular, the functional unit might comprise hydrogen production equipment for producing hydrogen. In particular, there are now offshore hydrogen production wind turbines having such hydrogen production equipment for producing hydrogen from seawater by using the energy provided by the wind turbine. In other words, offshore hydrogen production wind turbines are wind turbines using wind energy to perform electrolysis on seawater and produce hydrogen.

Offshore hydrogen production wind turbines represent an efficient response to the increasing need for the decarbonization of the energy supply industry caused by the threatening climate change: fossil fuels have to be replaced with green fuels.

Such offshore hydrogen production wind turbines might be either connected to an electrical grid (on-grid), in which case the electrolysis in performed in time slots where there is a surplus of electric energy in the electric grid. Alternatively, offshore hydrogen production wind turbines are disconnected from the grid and have the sole purpose of using wind energy to produce hydrogen via the electrolysis (off-grid) .

In both cases, such offshore hydrogen production wind turbines require equipment needed for producing, storing and delivering the produced hydrogen, such as, for example, electrolyzer units, gas processing equipment, drying and conditioning unit and gas outlet terminals. On top of that, they also require safety system, such as a nitrogen generation system needed for neutralizing the hydrogen within the system upon leakages or maintenance.

Often, the above equipment is, along with the further equipment needed for operating the wind turbine, commonly placed on the wind tower platform. Such architecture of the wind turbine platform might however be disadvantageous, in particular, this is the case when the hydrogen production unit can only enter into service after the whole wind turbine is functional. For example, the time between the installation of the hydrogen production equipment and the full functionality of the wind turbine can be well over six months, so that the hydrogen production equipment may deteriorate before entering into function.

### Summary of the invention

There may be a need for providing an alternative solution for arranging functional equipment to a wind turbine platform and/or for producing and delivering produced hydrogen. Also, there might be the need for exploring a new architecture having a more flexible and modular structure.

According to a first aspect of the present invention, a coupling system for coupling a functional unit, in particular hydrogen producing unit, to a wind turbine, is provided. The coupling system comprises a wind turbine platform arrangeable to a wind turbine tower and a support platform for supporting the functional unit. The wind turbine platform comprises first fixing means and the support platform comprises second fixing means, wherein the second fixing means are detachably coupled to the first fixing means, so that the support platform is detachably arranged at the wind turbine platform.

According to a second aspect of the present invention, a wind turbine comprising a wind turbine tower and a coupling system according to the first aspect of the present invention is provided. In such wind tower, the wind tower platform is arranged at the wind turbine tower.

According to a third aspect of the present invention, a method of coupling a functional unit, in particular hydrogen producing unit, to a wind turbine, is provided. The method comprises a first step of providing a wind turbine platform arrangeable to a wind turbine tower, the wind turbine platform having first fixing means; a second step of providing a support platform for supporting the functional unit, the support platform comprising second fixing means; and a third step of coupling the second fixing means to the first fixing means, to thereby couple the support platform to the wind turbine platform.

Within the meaning of the present invention, a functional unit might be a unit that provides a certain functionality to the wind turbine. For example, the functional unit might comprise hydrogen production equipment, such as, but not limited to, electrolyzing units, hydrogen storage systems and the like. A functional unit might also be an energy storage system, such as a battery, which can be used to smoothen the production highs and lows of the wind turbine.

Within the meaning of the present invention, a support platform is a platform which might be coupled to the wind turbine platform as a dependent platform. The support platform is configured to provide all the support structures (mechanical, electrical and so on) to the equipment forming the functional unit, so that the functional unit is not arranged at or on the wind turbine platform.

According to the present invention it is therefore provided that the support platform, with the functional unit, is coupled to the wind turbine through the wind turbine platform in a subsequent moment.

A first advantage of such solution is that the functional equipment supported by the support platform is coupled with the wind turbine at the right time, when the functional unit can enter in function and be fully deployed. Idle times, at which the functional unit is exposed to the external environment, are thus avoided. Therefore, the wind turbine is first brought into operation and then the functional unit is coupled with the wind turbine.

A second advantage is provided by the modularity of the coupling system, which allows the functional unit to be easily substituted with the whole support platform, if the need arises. For example, an electrolyzing unit might be easily substituted with all the support platform at the end of its lifetime, without the need of carrying out the cumbersome substitution of only pieces of the functional unit.

This also provides a faster exchange of the functional unit, thus reducing idle times of the wind turbine.

Also, another advantage of the present invention is that there is the possibility to retrofit the wind turbine to be equipped with a functional unit.

According to an embodiment, the second fixing means comprises a hook and the first fixing means comprises a hooking element, with which the hook is detachably coupled. Therefore, a particularly easy solution for the first and the second fixing means may be provided.

According to an embodiment, the hook comprises a latch for blocking the hook to the hooking element in a coupled position. In such a case, the latch secures the hook at the hooking element, thus improving the coupling quality between the hook (second fixing means) and the hooking element (first fixing means).

According to an embodiment, the hooking element comprises a support bar. Therefore, coupling between the hook and the bar is particularly easy to realize.

According to an embodiment, the hooking element comprises a receiving portion for receiving the hook, in particular a mating surface of the hook, and is configured for avoiding a rotation of the hook. In such case the receiving portion of the hooking element receives the hook and blocks it against a rotation to thus secure the hook and thus the support platform against external environmental influences such as, for example, wind gusts.

For example, it might be the case that the hooking element comprises a support bar and a receiving portion having a blind hole, in which a mating portion of the hook is received when the hook and the hooking element are coupled together.

According to an embodiment, the first fixing means is a first rail and the second fixing means is a second rail, wherein the first rail and the second rail are complementary couplable to each other. Thus it is possible to couple the first fixing means and the second fixing means by using a rail, thus distributing the weight of the support platform in a more distributed way.

According to an embodiment, the support platform comprises a support structure and a coupling surface, wherein the coupling surface is attached to the second fixing means and to the support structure. Thus the coupling surface allows a more uniform distribution of the weight of the support platform with respect to the case in which the second fixing means is attached to the support platform or to the support structure of the support platform in a punctual manner.

According to an embodiment, the coupling system further comprises locking means for locking the second fixing means to the first fixing means. The locking means allow a (detachable) connection between the first fixing means and the second fixing means, thus improving the quality of the coupling between them and reducing the risk of an accidental decoupling between them.

According to an embodiment, the locking means is one of a pin or a bolt. In particular, the pin or the bolt might be arranged in a through hole of the first fixing means and a corresponding through hole of the second fixing mean. Preferably a bolted connection with a screw and a nut is used as locking means to guarantee a more stable connection between the first fixing means and the second fixing means.

According to an embodiment, the locking means are configured to be remotely activated or remotely deactivated. Remotely activated or remotely deactivated means, in the context of the present application, the locking means can be controlled remotely in order to lock or to unlock them and, thus, to lock or unlock the second fixing means to the first fixing means. In particular, it may be provided that the support platform is arranged at the wind turbine platform by jack-up vessel and that the locking means are activated remotely from the jack-up vessel once that the second fixing means and the first fixing means are coupled with each other.

According to an embodiment of the second aspect of the invention, the wind turbine is an offshore wind turbine platform for hydrogen production and the functional unit comprises at least one electrolyzing unit for producing hydrogen. The functional unit might also comprise at least a hydrogen storage system.

According to an embodiment of the second aspect of the invention, the wind turbine platform comprises a through hole, through which the wind turbine tower is arranged.

According to a further embodiment of the invention, the wind turbine platform comprises first electrical and/or water connection points and the support platform comprises second electrical and/or water connection points, wherein the first connection points and the second connection points are configured to be connected with each other, when the first fixing means and the second fixing means are coupled together. Thus, when the first fixing means and the second fixing means are coupled together, electric signals or electric power and/or water may run from the wind turbine (platform) to the functional unit supported by the support structure, thus minimizing the amount of auxiliary needed by the functional unit and arranged at the support structure.

According to an embodiment of the third aspect of the invention, after the coupling of the second fixing means to the first fixing means, the method further comprises a step of locking the second fixing means to the first fixing means by a locking means.

According to a further embodiment of the third aspect of the present invention, it might be provided that the support platform is arranged at the wind turbine platform prior to the coupling of the second fixing means with the first fixing means by a jack-up vessel and that, after the coupling of the first fixing means with the second fixing means, locking means are activated remotely from the jack-up vessel in order to lock the second fixing means to the first fixing means.

In the present invention, features related to the coupling system may be also comprised in the wind turbine and in corresponding method features of the coupling method.

### Brief Description of the Drawing

- Figure 1: shows a schematic view of a wind turbine according to an embodiment of the present invention.
- Figure 2: shows an isometric view of a support platform according to the embodiment of Figure 1.
- Figure 3: shows an isometric view of the hook according to the embodiment of Figure 1.
- Figure 4: shows an isometric view of the hook according to Figure 3 mounted to the support platform of Figure 2.
- Figure 5: represents an isometric view of a wind turbine platform according to the embodiment of Figure 1.
- Figure 6: shows the process of coupling the support platform with the wind turbine platform.
- Figure 7: shows an isometric view of the support platform when coupled to the wind turbine platform.
- Figure 8: shows a side view of a coupling between the support platform and the wind turbine platform according to a possible modification of the present invention.
- Figure 9: shows a side view of a coupling between the support platform and the wind turbine platform according to a further possible modification of the present invention.
- Figure 10: shows a schematic view of a possible method according to the present invention.

### Detailed Description of the Drawings

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

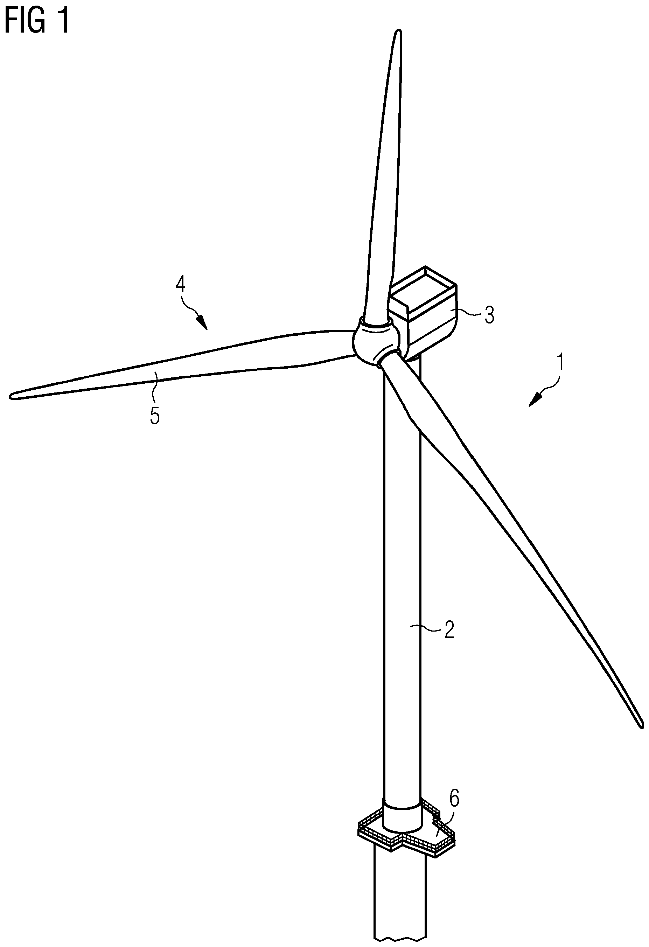

**Figure 1** shows a wind turbine 1 according to an embodiment of the present invention. The wind turbine 1 comprises a tower 2, which is mounted on a non-depicted fundament. A nacelle 3 is arranged on top of the tower 2.

The wind turbine 1 further comprises a wind rotor 4 having two, three or more wind turbine blades 5, also referred to as blades in the following description of the drawings.

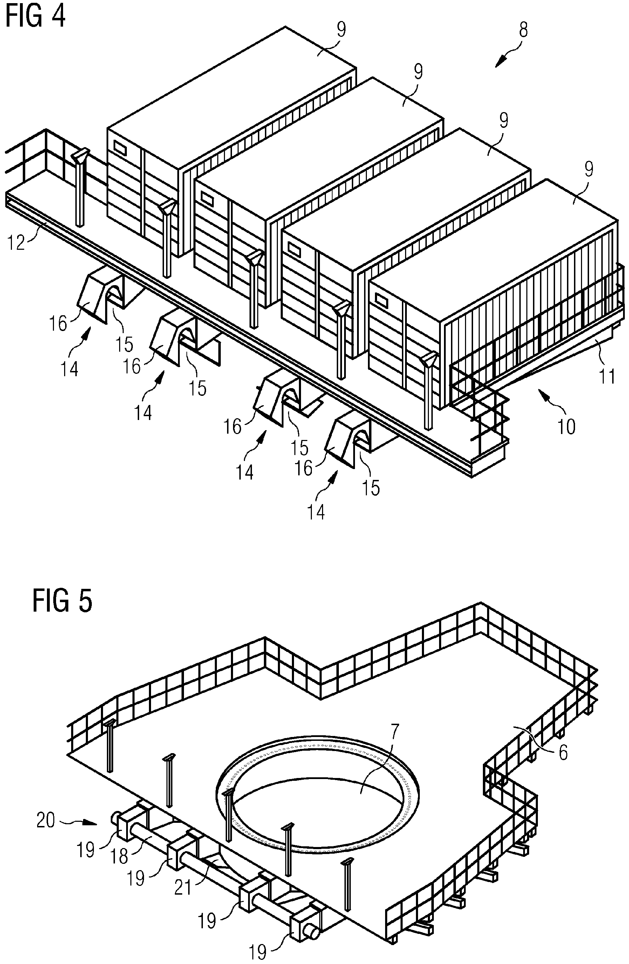

A wind turbine platform 6 is arranged at the tower 2, wherein the wind turbine platform 6 has a through hole 7 (see **Figure 5****),** through which the tower 2 is arranged.

Preferably, the wind turbine 1 is an offshore wind turbine and in particular an offshore hydrogen production wind turbine, which may be decentralized (if not connected to a grid) or on grid. Therefore, the wind turbine 1 may have the sole purpose of producing hydrogen by electrolyzing sea water using the energy produced by the wind turbine (decentralized wind turbine) or may be a wind turbine used for energy production for the electric grid, wherein the wind turbine produces hydrogen by electrolyzing sea water during time slots where there is a surplus of electric energy in the electric grid.

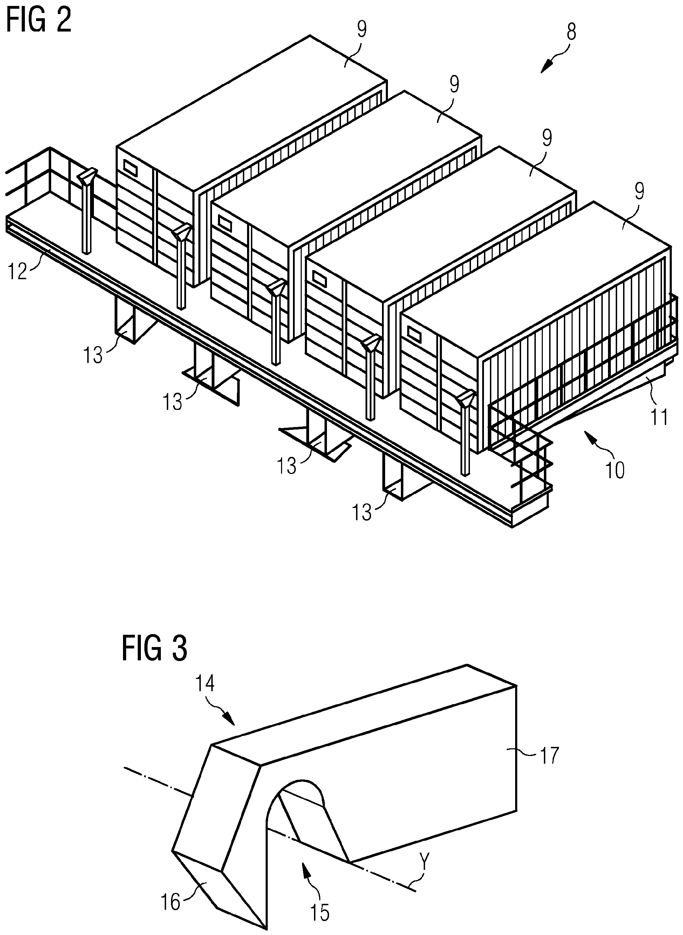

The equipment needed for producing hydrogen is provided by a functional unit 8 shown in **Figure 2****.** In **Figure 2****,** the functional unit 8 comprises four electrolyzing units 9, each having desalination and filtration equipment for preparing sea water for the electrolysis. The electrolyzing units 9 are mounted on a support platform 10. The functional unit 8 may also comprise storage tanks for storing the produced hydrogen as well as further equipment, which is functional to the manufacturing and storing of hydrogen.

The support platform 10 has a support structure 11, supporting the functional unit 8, and a coupling structure 12 with mounting portions 13, in which hooks 14 **(****Figure 3****)** are arranged. The hooks 14 are part of second fixing means 25.

As it can be seen from **Figure 3****,** each hook 14 comprises a hook section 15, a mating surface 16 and a mounting section 17. The mounting section 17 is configured to be inserted in the mounting portion 13 of the support platform 10. The hook section 15 is configured to be hooked around a hooking element 20 (see **Figure 5****)** for arranging the support platform 10 at the wind turbine platform 6 to thus couple the functional unit 8 to the wind turbine 1. The mating surface 16 is configured to interact with a receiving portion 21 of the hooking element 20 (see **Figure 5****)** to thus avoid a rotation of the hook 14 and this of the support platform 10 about an axis Y of the hook 14.

In **Figure 4** the support platform 10 is shown with the hooks 14 being inserted into the mounting portion 13.

In **Figure 5** an isometric view of the wind turbine platform 6 is shown. The wind turbine platform 6 comprises a support bar 18, which is arranged at the wind turbine platform 6 by means of a support bar mounting structure 19. The support bar 18 is part of a hooking element 20 (also first fixing means 20) and is configured to be detachably couplable with the hook 14 to couple the support platform 10 with the wind turbine platform 6. Furthermore, the hooking element 20 comprises a receiving portion 21 for receiving the hook 14 and, in particular, the mating surface 15 of the hook 14, so that the hook 14 cannot rotate around its own axis Y, so that the securing of the support platform 10 to the wind turbine platform 6 is more stable.

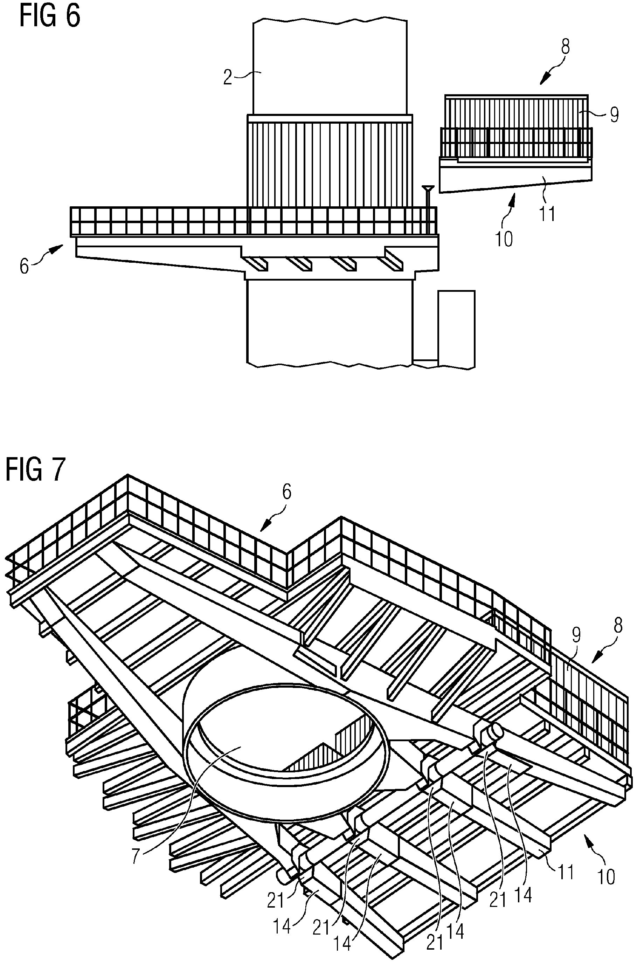

**Figure 6** depicts the process of coupling the hook 14 with the support bar 18 (not shown in **Figure 6****)** in order to arrange the support platform 10 to the wind turbine platform 6.

**Figure 7** shows an isometric view of the support platform 10 being arranged at the wind turbine platform 6, when the hook 14 and the support bar 18 are coupled with each other. As it can be seen in **Figure 7****,** the mating surface 16 of the hook 14 is received in the receiving portion 21 of the hooking element 20.

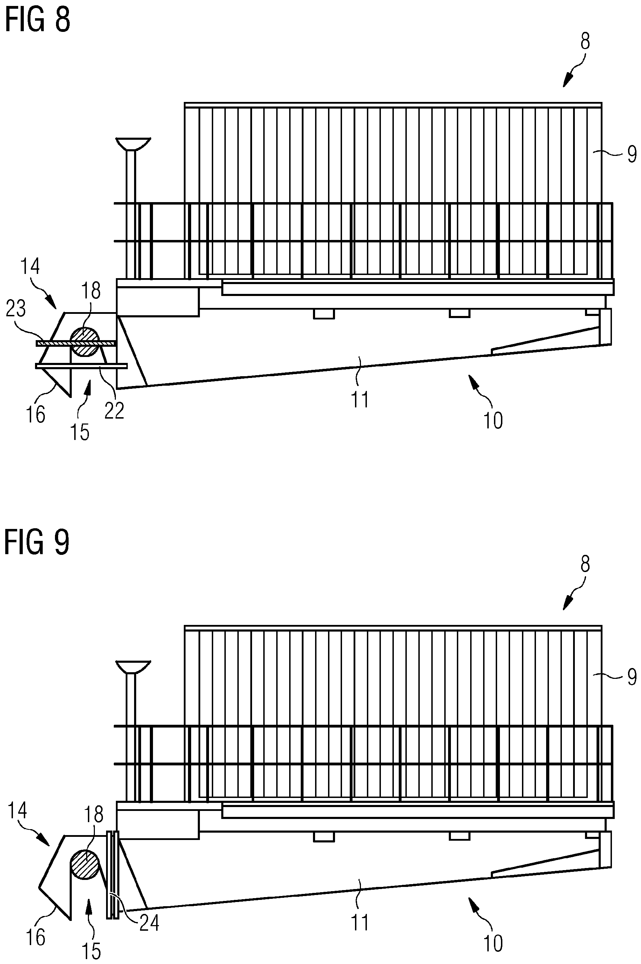

**Figure 8** shows a side view of the support platform 10 with the hook 14 coupled to the support bar 18. In the embodiment of **Figure 8****,** the hook 14 further comprises a latch 22, which is in a closed position in order to avoid an involuntary disengagement between the hook 14 and the hooking element 18. Furthermore, in the embodiment of **Figure 8****,** there is also a locking means 23, which is arranged in corresponding through holes (not shown) of the hook 14 and the support bar 18, so that a rotation of the hook 14 around the axis Y can be avoided and an improved stability of the coupling might be provided.

In **Figure 9** a side view of the support platform 10 with the hook 14 coupled to the support bar 18 is shown. In **Figure 9** the support platform 10 comprises a coupling surface 24, which is on the one side connected to the support structure 11 and on the other side to the hook 14. Thus, through the coupling surface 24, a more distributed weight distribution of the support platform 10 with the functional unit 8 can be guaranteed.

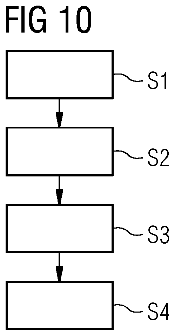

**Figure 10** shows a schematic view of a method according to an embodiment of the present invention.

In a first step S1, the wind turbine platform 6 comprising the first fixing means, such as, for example, the hooking element 20, is provided.

In a second step S2, a support platform 10 having the functional unit 8 for, for example, producing hydrogen, with second fixing means 25, comprising, for example, the hook 14, is provided.

In a third step S3, the first fixing means and the second fixing means 25 are coupled together, to thereby arrange the support platform 10 at the wind turbine platform 6, so that the functional unit 8 is coupled to the wind turbine 1. In the embodiment according to **Figures 1 to 9****,** therefore, the hook 14 is coupled with the support bar 18.

In a fourth and final step S4, locking means, such as, for example, the pin 23, are used for locking the hook 14 (and thus the second fixing means 25) to the hooking element 20, in particular to the support bar 18, so that the support platform 10 is securely arranged at the wind turbine platform 6.

In some embodiments of the present invention, the wind turbine platform 6 may comprise first connection points for delivering sea water, electricity and data to the functional unit 8 via second connection points of the support platform 10. The connection between the first connection points and the second connection points can be implemented after the coupling between the first fixing means 20 and the second fixing means 25.

Independent of the grammatical term usage, individuals with male, female or other gender identities are included within the term.

## Claims

1. Coupling system for coupling a functional unit (8), in particular hydrogen producing unit, to a wind turbine (1), the coupling system comprising:
a wind turbine platform (6) arrangeable to a wind turbine tower (2); and
a support platform (10) for supporting the functional unit (8);
wherein the wind turbine platform (6) comprises first fixing means (20) and the support platform (10) comprises second fixing means (25); and
wherein the second fixing (25) means are detachably coupled to the first fixing means (20), so that the support platform (10) is detachably arranged at the wind turbine platform (6).

2. Coupling system according to claim 1, wherein the second fixing means (25) comprises a hook (14) and the first fixing means (20) comprises a hooking element (20), with which the hook (14) is detachably coupled.

3. Coupling system according to claim 2, wherein the hook (14) comprises a latch (22) for blocking the hook (14) to the hooking element (20) in a coupled position.

4. Coupling system according to claim 2 or 3, wherein the hooking element (20) comprises a support bar (18).

5. Coupling system according to one of claims 2 to 4, wherein the hooking element (20) comprises a receiving portion (21) for receiving the hook (14), in particular a mating surface (16) of the hook (14), and configured for avoiding a rotation of the hook (14).

6. Coupling system according to claim 1, wherein the first fixing means (20) is a first rail and the second fixing means (25) is a second rail, wherein the first rail and the second rail are complementary couplable to each other.

7. Coupling system according to any of the preceding claims, wherein the support platform (10) comprises a support structure (11) and a coupling surface (24), wherein the coupling surface (24) is attached to the second fixing means (25) and to the support structure (11).

8. Coupling system according to any of the preceding claims, further comprising locking means (23) for locking the second fixing means (25) to the first fixing means (20).

9. Coupling system according to claim 8, wherein the locking means (24) is one of a pin or a bolt.

10. Coupling system according to claim 8 or 9, wherein the locking means (24) are configured to be remotely activated or remotely deactivated.

11. Wind turbine (1), in particular an offshore wind turbine for hydrogen production, comprising a tower (2) and a coupling system according to any of the preceding claims, wherein the wind turbine platform (6) is arranged at the wind turbine tower (2).

12. Wind turbine (1) according to claim 11, wherein the wind turbine (1) is an offshore wind turbine platform for hydrogen production and the functional unit (8) comprises at least one electrolyzing unit (8) for producing hydrogen.

13. Wind turbine (1) according to claim 11 or 12, wherein the wind turbine platform (6) comprises a through hole (7), through which the wind turbine tower (2) is arranged.

14. Method of coupling a functional unit (8), in particular hydrogen producing unit, to a wind turbine (1), the method comprising:
providing a wind turbine platform (6) arrangeable to a wind turbine tower (2), the wind turbine platform (6) having first fixing means (20);
providing a support platform (10) for supporting the functional unit (8), the support platform (10) comprising second fixing means (25);
detachably coupling the second fixing means (25) to the first fixing means (20), to thereby couple the support platform (10) to the wind turbine platform (6).

15. Method as of claim 14, wherein after the coupling of the second fixing means (25) to the first fixing means (20), the method further comprises:
locking the second fixing means (25) to the first fixing means (20) by a locking means (23).
